# EUROPEAN PATENT APPLICATION

(11) **EP 2 990 020 A1**
(43) Date of publication of application: **02.03.2016**
(21) Application number: 15162751.0
(22) Date of filing: 08.04.2015
(51) Int. Cl.: A61G 7/057, A61G 13/12, A47C 27/08, F16K 35/00

(54) **GAS COMMUNICATION DEVICE AND GAS RELEASE METHOD THEREOF**

(30) Priority: 25.08.2014 TW 103129134
(71) Applicant: Apex Medical Corp., New Taipei City, 23679 (TW)
(72) Inventor: Huang, Jian-Cheng, 23679 New Taipei City (TW); Tseng, Ching-Lien, 23679 New Taipei City (TW)
(74) Representative: Schwerbrock, Florian

(57) **Abstract**

A gas communication device (1, 1a, 1b) comprises a main body (10, 10a, 10b), at least one first pipe (20), at least one second pipe (30, 30a) and at least one sealing member (40, 40b). The first pipe (20) runs straight through the main body (10, 10a, 10b), and the first pipe (20) has two ends respectively forming a first opening (21) and a second opening (22); the second pipe (30, 30a) comprises a first end (31, 31a) and a second end (32, 32a), the first end (31, 31a) being communicated with the first pipe (20), the second pipe (30, 30a) extending from the first pipe (20) out of the main body (10, 10a, 10b) and forming a third opening (33, 33a) at the second end (32, 32a); the at least one sealing member (40, 40b) correspondingly seals the second opening (22) of the first pipe. A gas release method using the gas communication device (1, 1a, 1b) is also disclosed.

## Description

### FIELD OF THE INVENTION

This invention relates to a gas communication device and a gas release method thereof and more particularly to a device for inflation and deflation of a device to be inflated and a method of using the device to release gas from the device to be inflated.

### BACKGROUND OF RELATED ART

Devices to be inflated such as medical grade air mattresses or airbeds are useful for bedridden patients to relieve local stress concentration caused by lying and prevent bedsores. Air mattresses can be inflated when in use, and gas therein can be released in emergency conditions or not in use to facilitate patient rescue or storage.

Conventional inflation/deflation apparatuses for a device to be inflated such as air mattress or airbed generally comprise a gas supplier and a gas communication device. The gas supplier comprises an air pump allowing inflation/deflation mode setting, and the gas communication device is connected between the device to be inflated and the gas supplier to establish gas communication between the gas supplier and the mattress main body, so as to perform inflation or deflation of the device to be inflated.

For some conventional inflation/deflation apparatuses, the position of the gas communication device connected to the gas supplier has to be changed to form different gas communication arrangements before inflating or deflating the device to be inflated. However, in emergency situations, changing the position of the gas communication device inevitably increases the operation complexity and time, and manual operation in emergency situations is prone to error. Therefore, fast deflation of the device to be inflated requires inflation and/or deflation operation that is as simple as possible for users to avoid time waste and wrong manipulation. Accordingly, improvements are needed for the conventional gas communication device connecting the device to be inflated and the gas supplier.

### SUMMARY OF THE INVENTION

An objective of this invention is to provide a gas communication device useful for inflation and deflation of a device to be inflated, wherein rapid and automatic deflation is achieved by employing a novel design of gas communication pipe(s) to increase convenience in use.

To achieve the aforesaid objective, the gas communication device of this invention comprises a main body, at least one first pipe, at least one second pipe and at least one sealing member. The first pipe runs straight through the main body and has two ends respectively forming a first opening and a second opening; the second pipe comprises a first end and a second end, wherein the first end is communicated with the first pipe, and the second pipe extends from the first pipe out of the main body and forms a third opening at the second end; the at least one sealing member is used to correspondingly seal the second opening of the first pipe.

In one embodiment, a gas release method of this invention is applicable to the aforesaid gas communication device and comprises the following step: outputting gas from the first opening of the first pipe to the second opening when the second opening is not sealed by the sealing member, thereby creating a pressure difference between the second pipe and the first pipe to facilitate gas release from the device to be inflated through the second pipe and gas discharge via the second opening.

In another embodiment, the gas communication device of this invention is adapted to switchably provide gas from a gas supplier to a device to be inflated or discharge gas from the device to be inflated using the gas supplier, the gas communication device comprising a main body, at least one first pipe, at least one second pipe and at least one sealing member. The first pipe integrally runs straight through the main body and has a first opening and a second opening, the second pipe having one end communicated with the first pipe and extending out of the main body. The sealing member is used for sealing the second opening of the first pipe when the gas supplier supplies gas from the first opening of the first pipe to the device to be inflated, such that gas enters the device to be inflated through the second pipe, wherein when the second opening of the first pipe is not sealed by the sealing member, gas from the gas supplier is released from the second opening of the first pipe, thereby creating a pressure difference between the second pipe and the first pipe to facilitate gas release from the device to be inflated.

### BRIEF DESCRIPTION OF THE DRAWINGS

A more complete understanding of the subject matter can be derived by referring to the detailed description and claims when considered in conjunction with the following figures, wherein like reference numbers refer to similar elements throughout the figures.
FIG. 1 illustrates a partial exploded view of the first embodiment of a gas communication device of this invention;
FIG. 2 illustrates a cross-sectional view of the first embodiment of a gas communication device of this invention;
FIG. 3 illustrates the first embodiment of a gas communication device of this invention connected with a gas supplier to inflate a device to be inflated;
FIG. 4 illustrates the first embodiment of a gas communication device of this invention connected with a gas supplier to deflate a device to be inflated;
FIG. 5 illustrates a cross-sectional view of the second embodiment of a gas communication device of this invention;
FIG. 6A illustrates the first operational mode of the third embodiment of a gas communication device of this invention; and
FIG. 6B illustrates the second operational mode of the third embodiment of a gas communication device of this invention.

### DETAILED DESCRIPTION OF THE INVENTION

Since various aspects and embodiments are merely exemplary and not limiting, after reading this specification, skilled artisans appreciate that other aspects and embodiments are possible without departing from the scope of the invention. Other features and benefits of any one or more of the embodiments will be apparent from the following detailed description and the claims.

The use of "a" or "an" is employed to describe elements and components described herein. This is done merely for convenience and to give a general sense of the scope of the invention. Accordingly, this description should be read to include one or at least one and the singular also includes the plural unless it is obvious that it is meant otherwise.

As used herein, the terms "first," "second," "third" and the like are used for distinguishing between or referring identical or similar elements or structures and not necessarily for describing a sequential or chronological order thereof. It should be understood that the terms so used are interchangeable under appropriate circumstances or configurations.

Furthermore, as used herein, the terms "comprises," "comprising," "includes," "including," "has," "having" or any other variation thereof are intended to cover a non-exclusive inclusion. For example, a component, structure, article, or apparatus that comprises a list of elements is not necessarily limited to only those elements but may include other elements not expressly listed or inherent to such component, structure, article, or apparatus.

As used herein, the terms "gas" and "air" are used interchangeably to refer to air or any other gas or gaseous elements useful for inflating an air mattress.

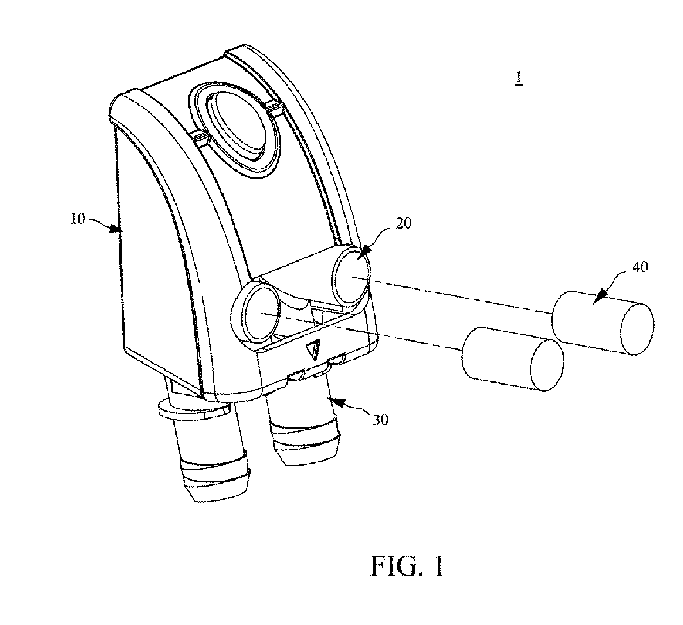

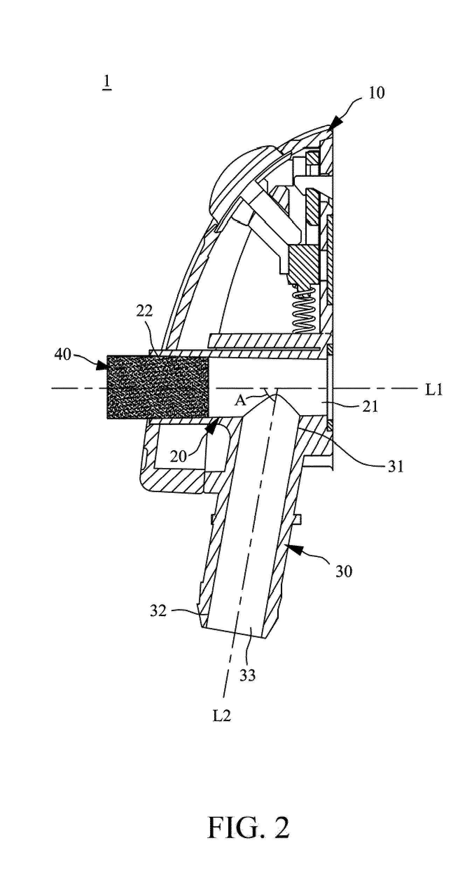

Refer to FIGs. 1 and 2, wherein FIG. 1 illustrates a partial exploded view of the first embodiment of a gas communication device 1 of this invention, and FIG. 2 illustrates a cross-sectional view of the first embodiment of a gas communication device 1 of this invention. As shown in FIGs. 1 and 2, in this embodiment, the gas communication device 1 comprises a main body 10, at least one first pipe 20, at least one second pipe 30 and at least one sealing member 40. In this invention, the main body 10 refers to a main portion of a physical structure and may be designed as one-piece integrally formed or a combination of multiple components. Generally, the main body 10 may act as a reference for the movements of respective movable elements and as a matrix for the connection of various elements or structures.

In this invention, each of the first pipe 20 and the second pipe 30 has a linear channel to reduce the flow path of gas and promote smooth flow of gas therein; however, this invention is not limited thereto, and other nonlinear pipes may also be used according to the spatial configuration, such as bent pipes. In one embodiment, the first pipe 20 is integrally formed as one-piece to prevent air leakage caused by the assembly of multiple components; however, this invention is not limited thereto; the first pipe 20 may also be a combination or assembly of different components, such as multiple pipe sections. Similarly, the second pipe 30 may also have a similar one-piece, integral structure.

The first pipe 20 runs straight through the main body 10 and has two ends respectively defining a first opening 21 and a second opening 22 on the outer surface of the main body 10. In addition, the first pipe 20 has a flow-guiding structure used for increasing the flow rate of gas in the first pipe 20. For example, in this invention, to enable faster air flow from the first opening 21 of the first pipe 20 to the second opening 22, the flow-guiding structure may be a conical structure; that is, the inner portion of the first pipe 20 may be configured as and define a conical structure like a trumpet to act as the flow-guiding structure, such that the cross-sectional area of the first opening 21 is less than that of the second opening 22, but this invention is not limited thereto. For example, the flow-guiding structure may also be configured as the flow-guiding sheets, flow-guiding grooves or other flow-guiding structures formed or arranged on the inner wall of the first pipe 20, or a throttle valve may be arranged in the first pipe 20 as different needs.

The second pipe 30 comprises a first end 31 and a second end 32. The first end 31 is communicated with the first pipe 20; that is, the first pipe 20 and the second pipe 30 are communicated with each other. The second pipe 30 extends from the first pipe 20 (i.e. the first end 31) and out of the main body 10, such that the second end 32 is exposed from the main body 10 and forms a third opening 33. In this embodiment, a part of the second pipe 30 is configured in the main body 10, but this invention is not limited thereto; for example, according to different needs, the second pipe 30 may be arranged in the main body 10 except for the third opening 33, or the second pipe 30 may be completely exposed out of the main body 10.

As shown in FIG. 2, the first pipe 20 and the second pipe 30 are configured as non-parallel pipes. The first pipe 20 is elongated along a first axis L1, and the second pipe 30 is elongated along a second axis L2, such that the first axis L1 of the first pipe 20 and the second axis L2 of the second pipe 30 define an included angle A ranging from 0° to 180° exclusively. Therefore, the second pipe 30 is configured as a branch of the first pipe 20 and extended away from the second opening 22. As shown in FIG. 2, in this embodiment, the included angle A is about 75°, and the second pipe 30 is elongated and deviated from the direction toward the second opening 22, but this invention is not limited thereto. To allow convenient production and avoid air leakage from the pipes, the first pipe 20 and the second pipe 30 may be integrally formed as one-piece.

At least one sealing member 40 is used to correspondingly seal the second opening 22 of the first pipe 20, and a user may operate to break or remove the seal of the at least one sealing member 40 on the second opening 22. In this embodiment, the sealing member 40 may be an element removable from the main body 10 or an element movably connectable with the main body 10 to move relative to the main body 10, but this invention is not limited thereto. For example, in this embodiment, the sealing member 40 is a plug removable from the main body 10 and insertable from the second opening 22 into the first pipe 20 to seal the second opening 22, as illustrated in FIG. 2.

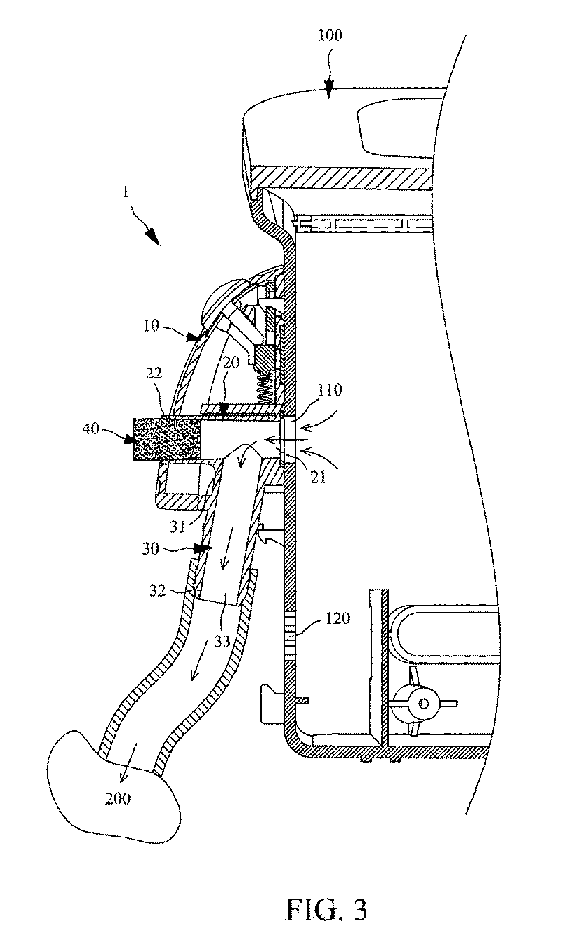

FIG. 3 illustrates the first embodiment of the gas communication device 1 of this invention connected with a gas supplier 100 to inflate a device to be inflated 200, wherein the air flow direction is indicated by the arrows in FIG. 3. As illustrated in FIG. 3, the gas communication device 1 of this invention may be used in conjunction with the gas supplier 100 to constitute gas supply equipment useful for inflation or deflation of the device to be inflated 200. The gas communication device 1 of this invention may be configured as a removable or separable structure to be rapidly connected with the gas supplier 100 or removed or separated from the gas supplier 100. In one embodiment, the gas communication device 1 has two holes formed respectively on the upper and lower portions engaged with two corresponding connection structures of the gas supplier 100 configured as two hooks. To remove the gas communication device 1 from the gas supplier 100, users may press the button on the gas communication device 1 to disengage the upper portion and then disengage the lower portion subsequently. However, the gas communication device 1 may also be configured as one-piece with the gas supplier 100 in an inseparable manner, depending on the need of product design.

When the gas communication device 1 is connected with the gas supplier 100, the first opening 21 of the first pipe 20 is aligned to the gas outlet 110 of the gas supplier 100, and the third opening 33 of the second pipe 30 is communicated to the device to be inflated 200 via a tube or hose, such that a gas path is formed among the device to be inflated 200, the gas communication device 1 and the gas supplier 100.

To inflate the device to be inflated 200, the second opening 22 of the first pipe 20 of the gas communication device 1 is sealed by the sealing member 40; after the gas supplier 100 has been turned on, an air pump (not shown) disposed therein may pump gas, such as air, into the gas supplier 100 via the gas inlet 120 and output the gas via the gas outlet 110 along the direction indicated by the arrows in FIG. 3.

Gas outputted via the gas outlet 110 enters the first pipe 20 through the first opening 21. Because the second opening 22 of the first pipe 20 is sealed by the sealing member 40, instead of being discharged from the second opening 22, the gas entering the first pipe 20 will be directed to the device to be inflated 200 along the second pipe 30 via the third opening 33 so as to inflate the device to be inflated 200 until the inflation is completed or terminated.

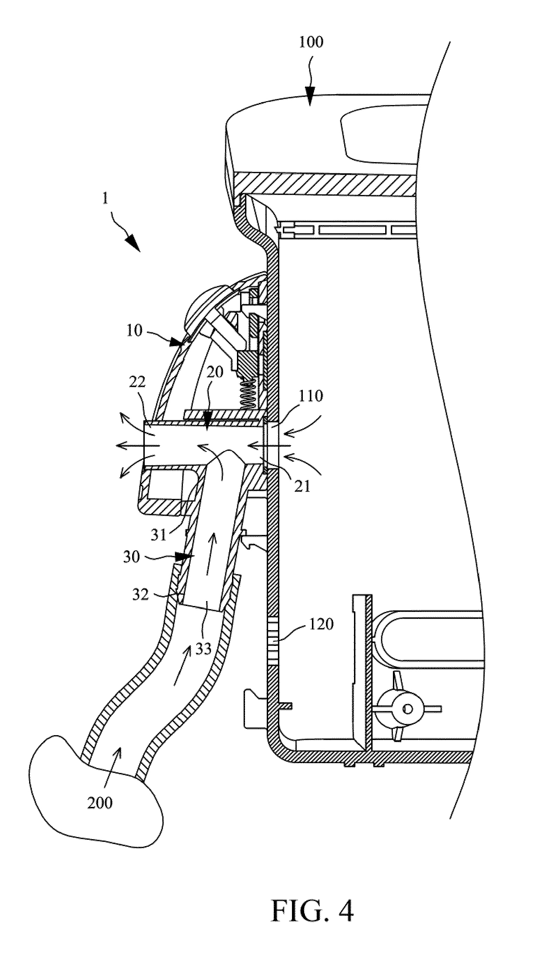

FIG. 4 illustrates the first embodiment of the gas communication device 1 of this invention connected with the gas supplier 100 to perform deflation of the device to be inflated 200, wherein the air flow direction indicated by the arrows in FIG. 4. As illustrated in FIG. 4, to remove gas from and deflate the device to be inflated 200, the use may break or remove the seal of the sealing member 40 on the second opening 22, such that the second opening 22 of the first pipe 20 is opened. In the meantime, after the gas supplier 100 has been turned on, the air pump disposed therein may pump gas into the gas supplier 100 via the gas inlet 120 and output the gas via the gas outlet 110, as described above for the inflation operation.

Gas outputted via the gas outlet 110 similarly enters the first pipe 20 through the first opening 21. However, since the second opening 22 of the first pipe 20 is clear and not sealed, gas entering the first pipe 20 will be directly discharged along the first pipe 20 via the second opening 22. Meanwhile, based on the Bernoulli's principle of fluid dynamics, there will be a pressure difference (i.e. negative pressure) between the second pipe 30 and the first pipe 10 at the intersection thereof (i.e. the first end 31 of the second pipe 30) because the air flows faster at the second opening 22 of the first pipe 20 than at the third opening 33 of the second pipe 39, such that higher pressure gas in the device to be inflated 200 flows toward the low pressure area, consequently removing the gas in the device to be inflated 200 through the second pipe 30 and discharging along with the gas stream in the first pipe 10 via the second opening 22, until the deflation of the device to be inflated 200 has been completed or terminated.

Accordingly, using the gas communication device 1 of this invention in conjunction with a conventional gas supplier 100, under the same operational mode and state of the gas supplier 100, a user can simply inflate and deflate the device to be inflated 200 by respectively sealing the second opening 22 with the sealing member 40 and removing the sealing member 40 from the second opening 22, without having to manually change the operational mode of the gas supplier 100 or troublesomely change the assembly configuration of the gas communication device and gas supplier 100 during the switch between inflation and deflation as descried in the background section, thereby largely increasing the operational convenience.

Moreover, the present invention also discloses a gas release method applicable to the aforesaid gas communication device 1, comprising outputting gas from the first opening 21 of the first pipe 20 to the second opening 22 when the second opening 22 of the first pipe 20 of the gas communication device 1 is not sealed by the sealing member 40, thereby creating a pressure difference (i.e. negative pressure) between the second pipe 30 and the first pipe 20 to facilitate gas release from the device to be inflated 200 through the second pipe 30 and gas discharge via the second opening 22.

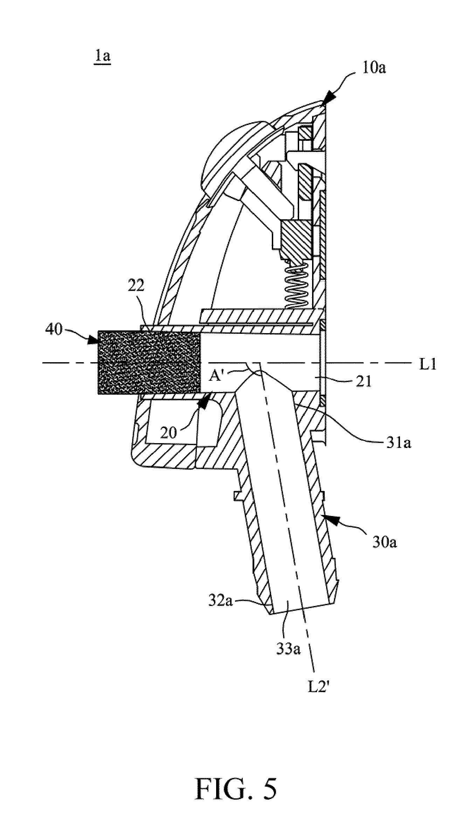

FIG. 5 illustrates a cross-sectional view of the second embodiment, which is a variation of the first embodiment, of the gas communication device 1a of this invention, wherein the included angle between the first pipe 20 and the second pipe 30a is changed. As shown in FIG. 5, the first pipe 20 of the gas communication device 1a has a first axis L1, and the second pipe 30a has a second axis L2', such that the first axis L1 of the first pipe 20 and the second axis L2' of the second pipe 30a define an included angle A' ranging from 90° to 180° exclusively, and other components and structures are arranged in a way identical to the first embodiment. For example, the included angle A' is about 105°, and the second pipe 30a is elongated and deviated from the direction toward the first opening 21, but this invention is not limited thereto. Similarly, the first pipe 20 and the second pipe 30a may also be integrally formed as one-piece.

In this embodiment, because the first pipe 20 and the second pipe 30a are arranged at an included angle A' between 90° and 180°, when the second opening 22 is not sealed and during the device to be inflated 200 is deflated, gas entering the first pipe 20 from the first opening 21 toward the second opening 22 and removed therefrom can be prevented from backflow to the second pipe 30a. Therefore, this design and configuration can effectively inhibit gas from flowing into the second pipe 30a and ensure a higher gas discharge and deflation performance of the gas communication device 1a according to the present invention.

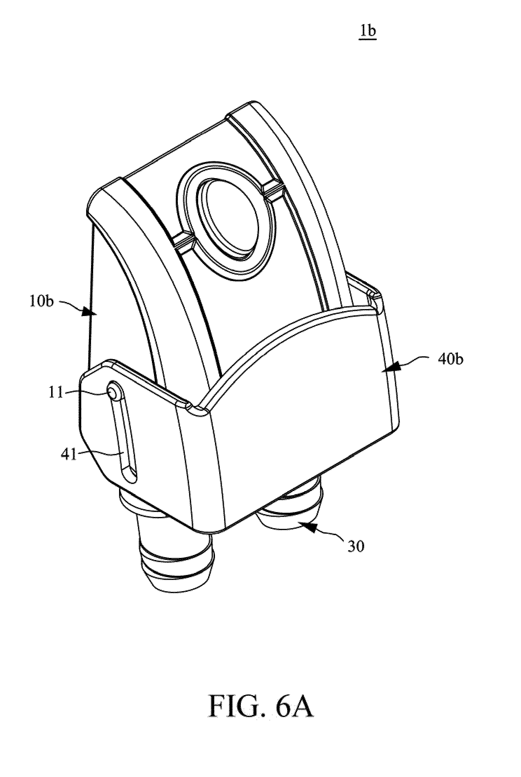

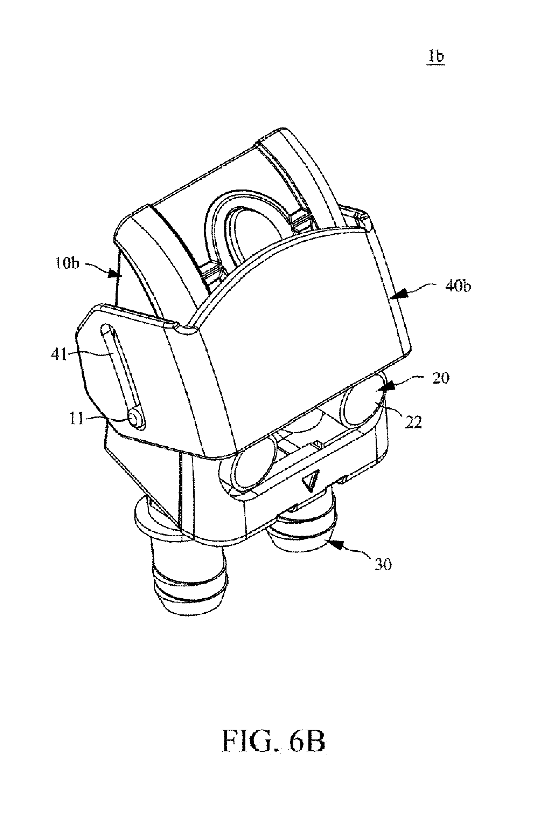

Refer now to FIGs. 6A and 6B, wherein FIG. 6A illustrates the first operational mode of the third embodiment of the gas communication device 1b of this invention, and FIG. 6B illustrates the second operational mode of the third embodiment of the gas communication device 1b of this invention. The third embodiment is also a variation of the first embodiment, wherein the sealing member uses a different structural design and the main body is provided with corresponding structures. In this embodiment, the sealing member 40b of the gas communication device 1b is configured as a cover movably connected with the main body 10b. The cover comprises two sliding slots 41, and the main body 10a comprises two protrusions 11 corresponding to the sliding slots 41. The sealing member 40b is combined with the main body 10b in such a way that the protrusions 11 pass through the corresponding sliding slots 41.

As illustrated by FIG. 6A, at the first operational mode of the gas communication device 1b, the sealing member 40b is arranged in front of the second openings 22 for sealing the second openings 22. When a user actuates the sealing member 40b, each sliding slot 41 may be slide relative to the corresponding protrusion 11 of the main body 10b, such that the sealing member 40b is moved relative to the main body 10b, thereby switching the gas communication device 1b to the second operational mode, in which the sealing member 40b is moved to a position to break the seal of the second openings 22, as illustrated in FIG. 6B. Accordingly, this embodiment enables users to seal the second openings 22 with the sealing member 40b and to break the seal more easily and increases the convenience in use.

The above detailed description is merely illustrative in nature and is not intended to limit the embodiments of the subject matter or the application and uses of such embodiments. Moreover, while at least one exemplary embodiment has been presented in the foregoing detailed description, it should be appreciated that a vast number of variations exist. It should also be appreciated that the exemplary one or more embodiments described herein are not intended to limit the scope, applicability, or configuration of the claimed subject matter in any way. Rather, the foregoing detailed description will provide those skilled in the art with a convenient guide for implementing the described one or more embodiments. Also, various changes can be made in the function and arrangement of elements without departing from the scope defined by the claims, which include known equivalents and foreseeable equivalents at the time of filing this patent application.

## Claims

1. A gas communication device (1, 1a, 1b), comprising:
a main body (10, 10a, 10b);
at least one first pipe (20) running straight through the main body (10, 10a, 10b), the first pipe (20) having two ends respectively forming a first opening (21) and a second opening (22);
at least one second pipe (30, 30a) comprising a first end (31, 31a) and a second end (32, 32a), the first end (31, 31a) being communicated with the first pipe (20), the second pipe (30, 30a) extending from the first pipe (20) out of the main body (10, 10a, 10b) and forming a third opening (33, 33a) at the second end (32, 32a); and
at least one sealing member (40, 40b) for correspondingly sealing the second opening (22) of the first pipe (20).

2. The gas communication device (1, 1a, 1b) of claim 1, wherein the first pipe (20) is integrally formed as one-piece.

3. The gas communication device (1, 1a, 1b) of claim 1, wherein the first pipe (20) has a flow-guiding structure for increasing the flow rate of gas in the first pipe (20).

4. The gas communication device (1, 1a, 1b) of claim 3, wherein the flow-guiding structure is a conical structure and the first opening (21) has a cross-sectional area less than that of the second opening (22).

5. The gas communication device (1, 1a, 1b) of claim 1, wherein the second pipe (30, 30a) and the first pipe (20) are arranged at an included angle (A, A') ranging from 0° to 180°.

6. The gas communication device (1, 1a, 1b) of claim 5, wherein the included angle (A, A') is configured to inhibit gas from entering the second pipe (30, 30a).

7. The gas communication device (1, 1a, 1b) of claim 5, wherein the included angle (A, A') ranges from 90° to 180°.

8. The gas communication device (1, 1a, 1b) of claim 1, wherein the sealing member (40, 40b) is a cover movably connected with the main body (10, 10a, 10b).

9. The gas communication device (1, 1a, 1b) of claim 7, wherein the cover comprises two sliding slots (41) and the main body (10, 10a, 10b) comprises two protrusions (11) corresponding to the sliding slots (41).

10. The gas communication device (1, 1a, 1b) of any one of claims 1 to 9, which is adapted to switchably provide gas from a gas supplier (100) to a device to be inflated (200) or discharge gas from the device to be inflated (200) using the gas supplier (100).

11. The gas communication device (1, 1a, 1b) of claim 10, wherein the sealing member (40, 40b) seals the second opening (22) of the first pipe (20) when the gas supplier (100) supplies gas from the first opening (21) of the first pipe (20) to the device to be inflated (200), such that gas enters the device to be inflated (200) through the second pipe (30, 30a).

12. The gas communication device (1, 1a, 1b) of claim 10, wherein when the second opening (22) of the first pipe (20) is not sealed by the sealing member (40, 40b), gas from the gas supplier (100) is released from the second opening (22) of the first pipe (20), thereby creating a pressure difference between the second pipe (30, 30a) and the first pipe (20) to facilitate gas release from the device to be inflated (200).

13. The gas communication device (1, 1a, 1b) of claim 10, wherein the second pipe (30, 30a) is extended away from the second opening (22).

14. A gas release method applicable to the gas communication device (1, 1a, 1b) of any one of claims 1 to 13, the method comprising: outputting gas from the first opening (21) of the first pipe (20) to the second opening (22) when the second opening (22) is not sealed by the sealing member (40, 40b), thereby creating a pressure difference between the second pipe (30, 30a) and the first pipe (20) to facilitate gas release from the device to be inflated (200) through the second pipe (30, 30a) and gas discharge via the second opening (22).

15. The gas release method of claim 14, wherein the gas communication device (1, 1a, 1b) is used in conjunction with a gas supplier (100) in a separable manner, and wherein the gas communication device (1, 1a, 1b) is separable from the gas supplier (100) when the gas communication device (1, 1a, 1b) is disengaged sequentially from two ends.
